# EUROPEAN PATENT SPECIFICATION

(11) **EP 1 679 877 B1**
(45) Date of publication and mention of the grant of the patent: **14.03.2012**
(21) Application number: 06000067.6
(22) Date of filing: 03.01.2006
(51) Int. Cl.: H04N 1/00, G03D 15/00, G06Q 30/00

(54) **Print order receiving method, print order receiver, and print production system**
Druckauftragsempfangsverfahren, Druckauftragsempfänger und Druckherstellungssystem
Procédé de réception d'une commande d'impression, récepteur de commandes d'impression et système de production d'impression

(30) Priority: 05.01.2005 JP 2005000339
(43) Date of publication of application: 12.07.2006
(73) Proprietor: FUJIFILM Corporation, Minato-ku Tokyo (JP)
(72) Inventor: Mogi, Fumio, Ashigara-kami-gun Kanagawa (JP)
(74) Representative: Klunker . Schmitt-Nilson . Hirsch

(56) References cited:
- EP-A2- 1 146 457
- WO-A-00/69164
- WO-A-99/19811
- US-A1- 2003 046 166
- US-B1- 6 657 702

## Description

### BACKGROUND OF THE INVENTION

The present invention mainly relates to print order reception and print production for an image photographed by a digital camera or the like, and more specifically to a print order receiver according to the preamble of claim 1 and a print order receiving method capable of greatly reducing time and labor of a customer who orders print production, and a print production system using the print order receiver.

Digital cameras have come into more widespread use along with the popularization of a personal computer (PC), a personal digital assistance (PDA), or the like. A portable telephone having a photographing function has also become popular.

Usually, images photographed by a digital camera, a portable telephone or the like are inputted to a PC or the like, where the images are processed and then used for various applications as in a website or on a new year greeting card. However, there is a strong demand for preserving such photographed images as high-quality (photographic) prints. To meet such a demand, laboratories or other specialized shops have recently started to produce prints from images photographed by a digital camera, a portable telephone, or the like.

When an order for producing prints from images photographed by a digital camera or the like is placed with a laboratory, for example, a print order receiver (hereinafter referred to as "receiver") installed in a store such as a laboratory, various commercial facilities or the like is used to place the order.

Generally, when a recording medium such as a SmartMedia^{™}, an IC card or a CD-R for storing photographed images (image data) is loaded on the receiver, or a digital camera or a portable telephone is connected to the receiver directly or by using connection means, the receiver reads the images and displays the images together with an order screen on a display.

A customer inputs order information regarding images to be printed, print sizes, the number of prints for each image and the like by using a touch panel display or a predetermined inputting method. When an order is established and an output instruction is issued the images and the order information are related to each other and sent to, for example, a sever or an image processor of a laboratory, and the images are supplied therefrom to a digital photo printer, where prints are produced in accordance with the order information, and the produced prints are outputted.

Recently, so-called Internet orders have also been made in which a personal computer at one's own home functions as a receiver by installing photograph ordering software or browsing a laboratory website through communication means such as the Internet, and images and order information are sent to the laboratory or the like through the communication means to order print production.

When photographs are taken during trips with friends or at various events such as a class reunion and a drinking party, prints are frequently distributed not only to a customer who has made a print order but also to acquaintances on the prints.

When there are many photographs and there are many orders for one photograph such as a photograph taken at a school event or a group event such as an excursion or an athletic meet, for example, prints are exhibited, and each orderer makes an order for desired prints. A specialized laboratory or the like sums up the contents of all orders or sums up the contents for each order, edits data according to the method applied to sort out prints for which orders were made to thereby produce prints, creates as required output slips to be put in bags based on the edited data, and sorts out the prints in accordance with the orders to put them in the bags (refer to JP 8-160541 A and JP 8-248612 A).

However, when a customer (print orderer) takes photographs at a trip, a drinking party and the like, and distributes the photographs to acquaintances, the customer determines the number of prints for each image in one order, and inputs the number of prints for each image to order prints in the order receiver. Thus, the prints must be ordered taking into account persons to whom the prints are distributed and the number of the persons. However, it is extremely difficult to properly understand and hence properly manage the number of prints for each image and the like at the time of ordering.

The finished prints are not sorted out as a matter of course, and supplied by a bundle outputted in increasing order of file number. Thus, a customer who receives the prints needs to sort out the prints for each person to whom the prints are to be distributed, which takes much time and labor. Especially, in the case of the digital camera, as photographing is not carried out on a film unit basis, the number of photographed images for one order tends to be larger, and accordingly more time and labor are necessary for sorting out the prints than the case of photographing with a film. Besides, as a customer is not a specialist such as a photographer, when sorting out the prints, the customer may touch a print surface or the like, which causes inconvenience such as staining of an image surface with a fingerprint.

A print order receiver similar to that defined by the preamble of claim 1 is known from US-A-6,657,702. Specifically, this document is related to print producing orders by utilizing a network. The display of this print order receiver is adapted to display images or an order screen. Making use of such order screen image data are sorted into groups by dragging required images onto a folder (e.g. a family folder) which was preliminary created. The sorting process relies upon the personal computer of a user.

### SUMMARY OF THE INVENTION

The present invention has been made to solve the aforementioned problems, and it is an object of the invention to provide a print order receiving method which enables a customer who took photographs at various events such as a trip with friends, a drinking party, or a class reunion and wants to make orders for (photographic) prints for acquaintances or the friends and distributes them, to easily and comfortably make the orders in accordance with print destinations, persons and the like, to reduce time and labor for sorting out the prints, and to distribute the prints in the optimal state having no stains to the friends or the like; a print order receiver used to implement the print order receiving method, and a print production system which utilizes the print order receiver.

In order to attain the above object, the present invention provides a print order receiver including the features of claim 1.

In the print order receiver of the present invention, the order screen has a matrix configuration that one of the individual package units and the first images of the one order is vertically arranged, and the other is horizontally arranged. Moreover, preferably, print sizes are displayed for each combination of each of the individual package units with each of the first images on the order screen of the display, one or more print sizes for each combination among the print sizes displayed on the order screen are selected by the input means, and the number of prints for each print size is inputted by the input means on the order screen. Moreover, preferably, at least one selected from among a print fee for the one order, the number of prints for the one order, a print fee for each of the individual package units, and the number of prints for each of the individual package units, is displayed on the order screen in accordance with an input of the print order through the input means. Moreover, preferably, the number of prints for each print size is indicated in at least one of the number of prints for the one order and the number of prints for each of the individual package units. Moreover, preferably, an information input screen which is provided as an area within the order screen or separately from the order screen, and on which additional information for each of the individual package units is inputted by the input means, is displayed on the display, the additional information is outputted together with the print order information related to each of the individual package units.

Further, the present invention provides a method of receiving a print producing order having the features of claim 7.

Further, the present invention provides a print production system including the features of claim 8.

In the print production system of the present invention, preferably, the information processing means stores the image data of the one order, and sequentially outputs the image data of the one or more second images to be printed to the printer for each of the individual package units in accordance with the print order information. Moreover, preferably, the information processing means generates order information data for reproducing information of each of individual package units as a visible image and outputs the order information data related to each of the individual package units, and the printer produces an order information print which reproduces the order information data and packages the order information print together with the one or more prints of the corresponding individual package unit.

According to the present invention, when a customer who has taken photographs at various events such as a trip with someone, a drinking party or a class reunion orders prints by using the print order receiver, the customer can set an individual package unit for each friend or acquaintance, and order images or the number of images to be printed, a print size for each image and the like for each individual package unit, and also the prints produced for each individual package unit are packaged to be outputted. Thus, even when prints are distributed to plural persons, prints can be ordered easily, comfortably, and properly by understanding destinations, images and the like. Furthermore, it is possible to reduce time and labor for sorting out prints according to destinations, and distribute prints of an optimal state having no stains to the friends or the like.

### BRIEF DESCRIPTION OF THE DRAWINGS

In the accompanying drawings:
FIG. 1 is a conceptual block diagram showing a print production system according to the present invention;
FIGS. 2A and 2B are conceptual diagrams showing an embodiment of a print order receiver according to the present invention;
FIG. 3 is a conceptual diagram showing an example of an order screen of the print order receiver shown in FIGS. 2A and 2B;
FIG. 4 is a conceptual diagram showing an example of an input screen for additional information in the print order receiver shown in FIGS. 2A and 2B;
FIG. 5 is a conceptual diagram showing an example of an order information print produced by the print production system shown in FIG. 1; and
FIG. 6 is a conceptual diagram showing an example of a printer of the print production system shown in FIG. 1.

### DETAILED DESCRIPTION OF THE PREFERRED EMBODIMENT

A print order receiving method, a print order receiver, and a print production system of the present invention will be described below based on the preferred embodiments with reference to the accompanying drawings.

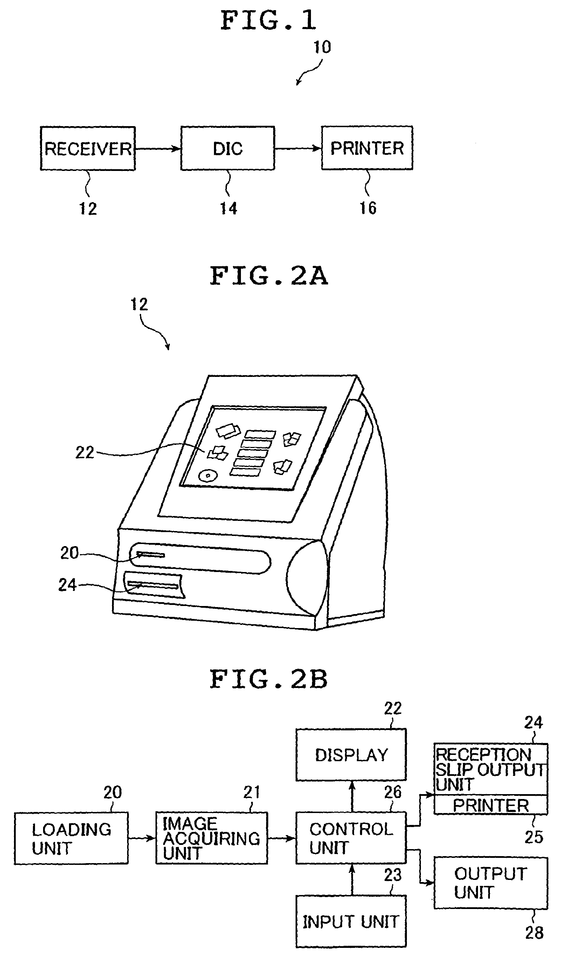

FIG. 1 is a conceptual block diagram showing an embodiment of the print production system of the present invention.

A print production system 10 (hereinafter referred to as "production system 10") in the shown embodiment is designed to produce (finished photographic) prints from images (image data) photographed by a digital camera, a portable telephone or the like in accordance with the customer's order (order information), thereby forming a print pack to be described below. For example, the production system 10 includes a print order receiver 12 (hereinafter referred to as "receiver 12") of the present invention, a digital image controller 14 (hereinafter referred to as "DIC 14"), and a printer 16.

The receiver 12 is a print order receiver of the present invention to implement the print order receiving method of the present invention, and the DIC 14 and the printer 16 constitute a print system of the print production system of the invention.

The production system 10 in the shown embodiment includes one receiver 12, one DIC 14, and one printer 16, however, the production system 10 of the present invention is not limited to this. The production system 10 may include more than one receiver 12 or printer 16 connected to one DIC 14, or more than one DIC 14 corresponding to one printer 16. Alternatively, the production system 10 may include more than one DIC 14 connected with each other by communication means.

FIGS. 2A and 2B show conceptual diagrams of one embodiment of the receiver 12.

The receiver 12 is installed in commercial facilities to receive an order for producing prints from images (image data) photographed by a digital camera or an imaging device in a portable telephone having a photographing function. The receiver 12 includes a loading unit 20 of a storage medium, an image acquiring unit 21 for acquiring image data of one order from the storage medium loaded on the loading unit 20, a display 22 for displaying an order screen including multiple images reproduced from image data of one order acquired in the image acquiring unit 21, an input unit 23 for inputting one print order with the order screen displayed on the display 22, a reception slip output unit 24 for outputting a reception slip of the one print order inputted from the input unit 23, a printer 25 for creating the reception slip, a control unit 26 for controlling reception of image data of one order from the image acquiring unit 21, displaying of the order screen on the display 22 and inputting of the one print order in the input unit 23, creating print order information and the like, an output unit 28 for relating the print order information created by the control unit 26 and image data of one order to each other and outputting them. The control unit 26 also controls each unit in the receiver 12 such as the loading unit 20, the image acquiring unit 21, the display 22, the input unit 23, the reception slip output unit 24, the printer 25 and the output unit 28.

In addition, the receiver 12 may include a CPU, a ROM, a RAM, a display controller, a media drive for reading/recording image data of a storage medium, and the like.

As described below in detail, the receiver 12 reads out images (image data) from a storage medium loaded on the loading unit 20, relates order information of each of the inputted images to images (image data) of one order, and supplies them from the output unit 28 to the DIC 14.

There is no particular limit on the storage medium accepted by the receiver 12. Well-known storage media such as SmartMedia^{™}, CompactFlash^{™}, Memory Stick^{™}, SD Memory Card^{™}, a PC Card, a CD-R, and an MD can all be used. Needless to say, the storage medium accepted by the receiver 12 is not limited to one type, and plural types of storage medium may be accepted.

The receiver 12 may read images directly from a digital camera, a portable telephone, or the like by using predetermined connection means or the like.

Further, another method may be used in which, when a photographed film a customer brought to a laboratory or the like is developed to obtain a developed film, an image is read from the developed film with a scanner used to photoelectrically read images, and the read image is displayed in the receiver 12 and processed in the same manner as an image read from a storage medium (after having optionally been executed negative/positive conversion). Needless to say, as in the case of a Fuji color CD^{™} of Fuji Photo Film Co., Ltd, an image may be read out from a CD-R having been supplied to a customer that includes digital data obtained by reading a developed film with a scanner.

According to the present invention, orders for producing prints from various images in the form of digital data can be addressed by using the receiver 12.

In the shown embodiment, the display 22 is a so-called touch panel functioning as the input unit 23 for performing various operations. Various operations such as inputting of order information and various instructions are carried out by a well-known graphical user interface (GUI) which uses a displayed image and the display 22.

The receiver 12 is not limited to the one in which the input operation is performed on the display 22. The input operation may be performed with any operation means such as a mouse, a keyboard, and an operation button, as long as the operation means functions as the input unit 23. Alternatively, the input operation may be performed by using both of the display 22 and the operation means.

There is no particular limit on the printer 25 where a reception slip is created. A well-known printer used in a photograph order receiver installed in a store, as exemplified by an ink jet printer or a thermal printer, may be used.

In one order for print production, when the number of individual package units is equal to or less than the set upper limit, a customer can make a print order with the receiver 12 by selecting an optional number of individual package units, selecting images to produce prints from images of one order for each package unit, and setting the print size for each image and the number of prints for each print size.

The print order receiving method and the printer order receiver of the present invention will be described below in detail by explaining the operation of the receiver 12.

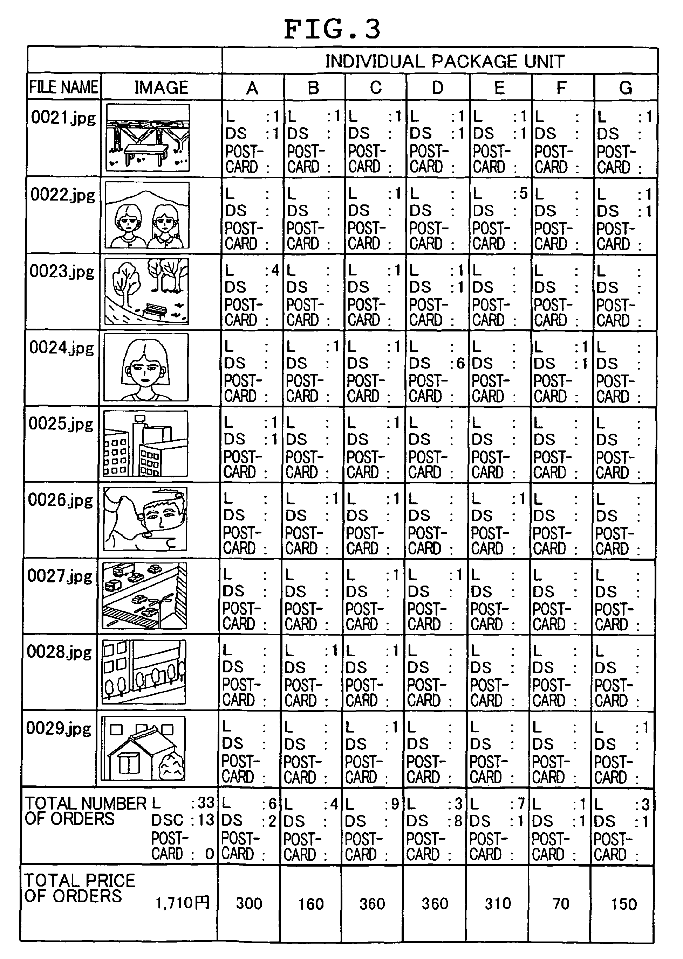

Upon loading of a storage medium on the loading unit 20 by a customer who makes an order for print production, an instruction for starting print order reception is issued. In the receiver 12, all images recorded in the storage medium are first read by the image acquiring unit 21, and an order screen (window) as shown in FIG. 3 is displayed on the display 22.

For example, the order screen is in a matrix where image file names and thumbnail images are arranged vertically and individual package units are arranged horizontally. In the shown example, seven individual package units A to G are set, which are optionally selectable.

The number of selectable individual package units is not limited to seven in the shown example, but it may be six or less, or eight or more. Further, a customer who orders prints may optionally set the number of individual package units at a time of ordering.

On the order screen, all images of one order read out from the storage medium may be displayed. Alternatively, only a predetermined number of images may be displayed on the order screen. In this case, all images of one order can be recognized by scrolling or other means. Similarly, all the selectable individual package units may be displayed, or only a predetermined number of individual package units may be displayed. In this case, all the individual package units are recognized by scrolling or other means.

In the receiver 12 of the shown example, three types, i.e., an L size, a DSC (DS) size and a postcard size, are set for the size of a print to be ordered, the print size can be selected for each combination of an individual package unit with an image, and the number of prints can be set for each size.

Below the file names and the thumbnail images, the total number of prints of one order added up by the control unit 26 is displayed for each size, and the print fee for the one order calculated by the control unit 26 is displayed therebelow. Below each individual package unit of a matrix area, the total number of prints added up by the control unit 26 is displayed for each print size in each individual package unit, and the print fee calculated by the control unit 26 is displayed for each individual package unit therebelow.

As described above, the display 22 of the receiver 12 is a touch panel functioning as the input unit 23.

A customer (orderer) selects images to produce prints for each individual package unit by a GUI using a display on the display 22 (this is also the case with various input instructions), and inputs the print size and the number of prints in each print size for each image in each individual package unit.

For example, in one order, nine images of [0021. jpg] to [0029. jpg] are recorded in the storage medium, and A to G are selectable as individual package units. Thus, the print size and the number of prints for each print size are inputted for each combination of an individual package unit with each image. For example, as shown in FIG. 3, in the individual package unit A, one L size print and one DSC size print for the image of [0021. jpg], four L size prints for the image of [0023. jpg], and one L size print and one DSC size print for the image of [0025. jpg] are inputted. In the individual package unit B, one L size print for the image of [0021. jpg], one L size print for [0024. jpg], one L size print for the image of [0026. jpg], and one L size print for the image of [0028. jpg] are inputted. In the individual package unit C, one L size print for the image of [0021. jpg], one L size print for the image of [0022. jpg], ...... are inputted.

After the inputting has been made, according to the increase/decrease in the number of prints, the total number of prints for each print size and the print fee in one print order, and the total number of prints for each print size and the print fee in each individual package unit are counted as occasion demands by the control unit 26, and the total count is updated and displayed on the display 22.

Thus, prints can be ordered while confirming the print size, number of prints, fee, and the like for each image and for each individual package unit, which is comfortable and easy. In addition, images and the number of prints can also be easily confirmed based on the number of destinations or persons, which can also advantageously prevent an erroneous order to be made.

Needless to say, it is not necessary to input print orders for all individual order units in the receiver 12, and it is assumed that individual package units having no print orders inputted therein have not been selected. Accordingly, as long as print sorting or individual packaging is not necessary, a customer only needs to input an order in one individual order unit.

In the shown example, the print size and the number of prints for each size are selected for each combination of each individual package unit with an image. However, this is in no way limitative of the present invention.

For example, the print size may be a specific size alone. When all the prints in one order have the same size, means for inputting this information may be provided to input an instruction in this regard beforehand or later to eliminate the necessity of inputting the size for each print. Moreover, when all the prints have the same size in the individual package unit, an instruction may be inputted beforehand in the same manner to eliminate the necessity of inputting the sizes in the unit.

In the illustrated receiver 12 of the preferred embodiment, various kinds of additional information can be inputted for each individual package unit.

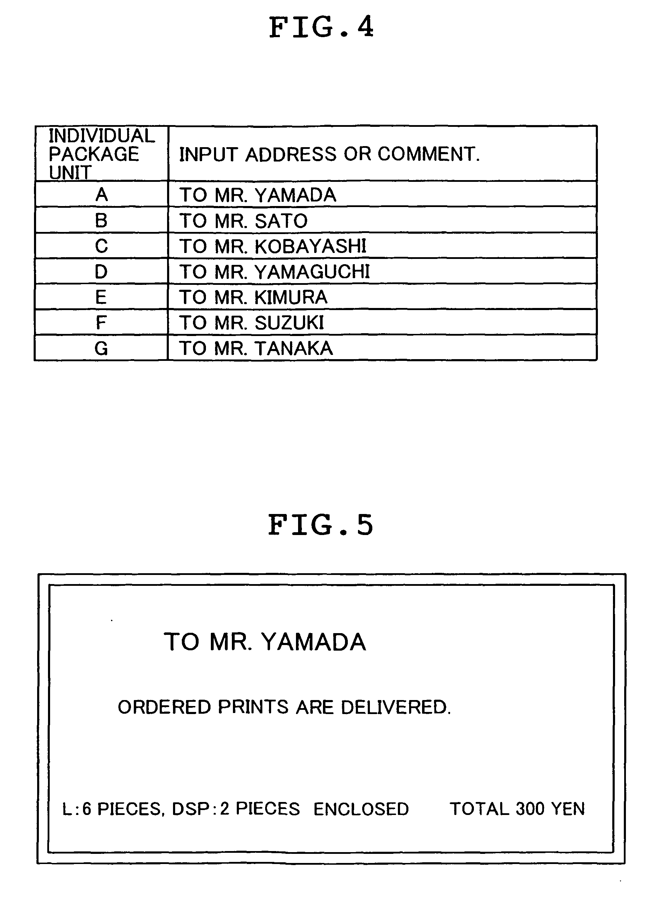

When an input is made to inform that input of a print order (input of order information) of the one order has been completed, the receiver 12 displays a screen (window) as shown in FIG. 4 on the display 22 to input various kinds of additional information for each individual package unit. Thus, print destinations (addresses), various comments, and the like can be inputted on the screen for each individual package unit. Also, comments such as "Photographs taken the other day in the drinking party are delivered. Party organizer", "Photographs have been made. Fees will be charged later." and "Ordered prints are delivered." may be prepared so that a suitable one can be selected for example on a pull-down menu or the like.

This information input screen may be displayed simultaneously with the order screen, or after the completion of the input of the order information through switching of the screen of the display 22.

When the input of the print order and the input of the additional information are finished, and an output instruction (instruction for order establishment) is provided, the images of the one order, the order information of the one order, and the additional information such as addresses or comments are related to one another in the control unit 26 of the receiver 12 and then outputted from the output unit 28 to the DIC 14. A reception slip including the fee, the number of prints and the like are created with the printer 25 and the created reception slip is then outputted from the reception slip output unit 24.

As described above, in the receiver 12, a customer can select an individual package unit in one print order to individually select images to produce prints. Thus, the order information contains at least information on the individual package unit selected for this one order, images from which prints are to be produced, the print size of each image and the number of prints for each print size in each individual package unit. As a preferred embodiment, the order information (or additional information) contains the print fee for each individual package unit, and the total number of prints for each size. Moreover, the order information or the additional information may contain the print fee of one order, and the total number of prints for each print size in one order, or the like.

The DIC 14 executes predetermined image processing for the respective images of one order that have been supplied, and outputs the processed images to the printer 16 as images (image data) for producing prints in the printer 16. When more than one printer 16 is connected to the DIC 14, the DIC 14 may recognize the operation state or the like of each printer 16, and select a suitable printer 16 from which the images are to be outputted.

There is no particular limit on image processing executed by the DIC 14. Various well-known image processing operations such as image enlargement/reduction (electronic magnification), gradation correction, color/density correction, color saturation correction, and sharpness processing can be used. All these processing operations only need to be implemented by a well-known method.

In the illustrated production system 10, prints are produced in the printer 16 for each individual package unit inputted in the receiver 12, and outputted in package.

In the shown embodiment, to package prints for each individual package unit, images of one order are stored in the DIC 14 and processed images are arranged so as to correspond to the order information in the individual package units, and sequentially supplied to the printer 16. In the present invention, the DIC14 is not the sole device for executing the above processing in the present invention, and it may be executed in the receiver 12 or the printer 16.

In the DIC 14, unprocessed images may be stored so that image processing for each image is implemented at the time of supplying it to the printer 16. Alternatively, processed images obtained by executing necessary image processing other than image enlargement/reduction may be stored so that the image enlargement/reduction is only executed on each image at the time of supplying it to the printer 16.

For example, it is assumed that an order shown on the order screen of FIG. 3 is made, and an image, order information, and additional information are related to one another in the receiver 12 and are supplied from the receiver 12 to the DIC 14.

The DIC 14 first supplies images (and information on the print size, sic passim) sequentially to the printer 16 in order of one L size image of [0021. jpg] and one DS image of [0021. jpg], four L size images of [0023. jpg], and one L size image of [0025. jpg] and one DS image of [0025. jpg] corresponding to the order information in the individual package unit A.

After the images corresponding to the individual package unit A has been supplied to the printer 16, the DIC 14 supplies information (individual sorting information) indicating the end of one individual package unit to the printer 16. Then, the DIC 14 sequentially supplies images to the printer 16 in order of one L size image of [0021. jpg], one L size image of [0024. jpg], one L size image of [0026. jpg], and one L size image of [0028. jpg] corresponding to the order information in the individual package unit B.

Next, after individual sorting information has been supplied to the printer 16, in the same manner as above, images corresponding to the individual package unit C are sequentially supplied to the printer 16, then, individual sorting information is supplied, and images corresponding to the individual package unit D are supplied to the printer 16. Thereafter, in the same way, images corresponding to the individual package units E to G are supplied to the printer 16, respectively, in this order. Here, after images corresponding to the individual package unit G have been supplied to the printer 16, sorting information (order-basis sorting information) indicating the end of one order is supplied to the printer 16.

When more than one print with the same print size is ordered for one image in each individual package unit, information on the number of prints corresponding to the image and the size may be supplied to the printer 16 while the number of images to be supplied to the printer 16 is set at 1.

The image to be first supplied in each individual package unit is not limited to the image in the first frame ([0021. jpg] in the example shown in FIG.3). The image in the last frame ([0029. jpg] in example shown in FIG.3) may be first supplied depending on the packing of prints in the printer 16.

In this case, as described above, additional information corresponding to an individual package unit and the order information are related to each other and supplied to the DIC 14. Moreover, the order information contains the print fee for each individual package unit, and the total number of prints for each size.

As a preferred embodiment, the DIC 14 produces an image (image data) of an order information print as shown in FIG. 5 that is a print on which additional information (address (TO MR. YAMADA) and comment ("ORDERED PRINTS ARE DELIVERED") for each individual package unit in the shown example), the total number of prints for each print size in each individual package unit and the print fee for each individual package unit are reproduced, and supplies it to the printer 16 before supplying or after having been supplied the images of each individual package unit.

The order information print in each individual package unit is outputted to the printer 16 in the order determined according to the accumulation of the prints in the printer 16, that is, in such an order that the order information print (surface on which the image thereof is reproduced) is placed on top of the prints in each individual package unit. That is, in each individual package unit, the order information print is first outputted in the case where the prints are discharged from the printer 16 with their back surfaces facing up, and the order information print is outputted after the output of the prints in the case where the prints are discharged from the printer 16 with their front surfaces facing up.

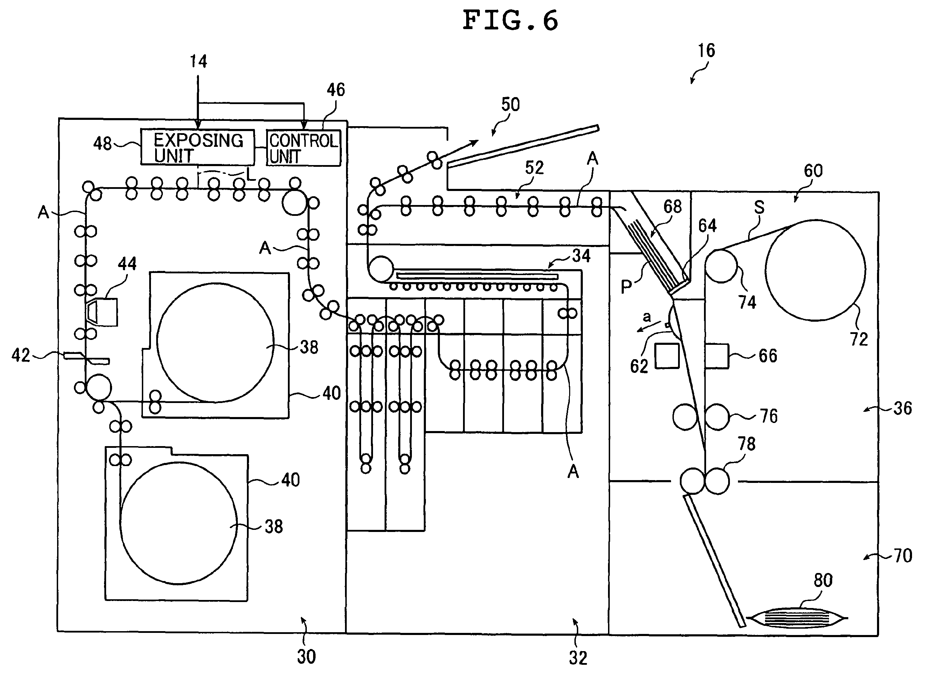

The printer 16 exposes a photosensitive material (printing paper) A to form latent images in accordance with the images (image data) supplied from the DIC 14, executes a predetermined development process to produce (photographic) prints, and packs (packages) them for each individual package unit. As shown in FIG. 6, the printer 16 includes an exposure part 30, a developing part 32, a drying part 34, and a packing part 36.

The images, the order information, and the additional information are supplied from the DIC 14 to an exposing unit 48 of the exposure part 30, and a control unit 46 for controlling the operation of the printer 16.

In the illustrated printer 16, two magazines 40 for accommodating rolls 38 of the wound photosensitive material A can be loaded into the exposure part 30. Though not particularly described, the photosensitive material A is conveyed to each portion by well-known conveying means such as a carrier roller pair.

The photosensitive material A is pulled out of the magazine 40, cut by a cutter 42 into a desired print size, and supplied to a predetermined exposing position after a back print is recorded by a back printer 44. The cutting of the photosensitive material A is executed in accordance with the print size information under the control of the control unit 46.

The images supplied from the DIC 14 (including the image for the order information print) are supplied to the exposing unit 48.

The exposing unit 48 deflects an optical beam L (recording light) modulated in accordance with the image (image data) in a main scanning direction to make the deflected optical beam L incident on the exposing position. On the other hand, the photosensitive material A is conveyed for scanning in an auxiliary scanning direction orthogonal to the main scanning direction while being passed through the exposing position. Accordingly, the photosensitive material A is two-dimensionally scanned by exposure to the optical beam L modulated in accordance with the images, and latent images are recorded thereon. The photosensitive material A having the latent images recorded thereon are sequentially supplied to the developing part 32.

In this case, as described above, the images supplied from the DIC 14 to the printer 16 are arranged in the order determined in accordance with the order information in each of the individual package units. That is, in the printer 16, the images are sequentially exposed for each individual package unit in accordance with the order information, and the exposed photosensitive material A is sequentially supplied to the developing part 32. As described above, in each individual package unit, exposure is carried out in the order determined so that the order information print (image surface) is placed on the top.

As in the case of an ordinary photo printer, the photosensitive material A supplied to the developing part 32 is subjected to development, bleaching/fixing, and water washing, in each of processing tanks, dried by a heater or the like in the drying part 34, and passed through a conveying part 52 to be discharged as a (finished photographic) print P into the packing part 36.

A large-sized, unpacked print is not conveyed through the conveying part 52, but is discharged from the drying part 34 into a large size print discharge part 50 located above.

The packing part 36 is a part for accumulating and packing prints (including an order information print) P for each individual package unit in order information of one order, and includes a package sheet supply unit 60 for supplying a package sheet S, opening means 62, a stopper 64, a sealing/cutting unit 66, an accumulating unit 68, and a product receiving unit 70.

The package sheet S is a transparent long sheet used as a cylindrical bag. Cut lines are made on one surface of the package sheet S. Each of the cut lines is provided for each package and extends along a direction orthogonal to the longitudinal direction. The package sheet S is wound into a roll shape to be loaded into the package sheet supply unit 60 as a sheet roll 72 with the surface having the cut lines facing the accumulating unit 68, and is conveyed through a predetermined path by a guide roll 74 and a carrier roller pair 76.

The opening means 62 holds a portion just below the cut line of the package sheet S (e.g., holds it by suction), and moves in a direction (direction indicated by an arrow a in FIG. 6) for opening the package sheet S into a cylinder, thereby opening the package sheet S at the cut line.

In the shown example, the lower part of the package sheet S is guided by the carrier roller pair 76 in a state in which the lower end thereof is sealed as described below, and the package sheet S is on standby in a state in which the sheet S is suspended from the guide roll 74 while being opened at the cut line by the opening means 62.

The prints P conveyed from the conveying part 52 are supplied to the accumulating unit 68. The accumulating unit 68 has a downwardly inclining slope whose lower end is directed toward the opening of the package sheet S opened at the cut line by the opening means 62, and a stopper 64 at the lower end of the accumulating unit 68 is usually closed. Thus, the prints P supplied from the conveying part 52 are once accumulated in the accumulating unit 68.

At the packing part 36, when it is found that the last print P for the individual package unit has been discharged into the accumulating unit 68 based on individual sorting information or the like supplied from the DIC 14, the stopper 64 is opened, and then is closed before the next print P is discharged into the accumulating unit 68.

As a result, the prints P for one individual package unit accumulated in the accumulating unit 68 drop through the opening at the cut line formed by the opening means 62 into the package sheet S. As described above, exposure and development are sequentially executed for each individual package unit, and thus the prints P for the next individual package unit are sequentially discharged into and accumulated in the accumulating unit 68.

After the prints P for one individual package unit have been put in the package sheet S, the sheet roll 72 is rotated to feed the package sheet S to a position where the cut line reaches the sealing/cutting unit 66.

Next, the sealing/cutting unit 66 seals (closes) the package sheet S at the upper and lower parts of the cut line, and then cuts the package sheet S at the cut line. Accordingly, the lower end of the package sheet S connected to the sheet roll 72 is closed, and a print pack 80 containing the prints P for one individual package unit is completed.

The print pack 80 containing the prints P is conveyed by the carrier roller pairs 76 and 78 to be received in the product receiving unit 70.

As apparent from the foregoing description, according to the present invention, for one order for print production made by an individual customer, it is possible to determine images to produce prints for each individual package unit and make an order for print production through the receiver 12. Thus, in the case where an individual customer who has taken photographs at a trip with friends or the like makes an order for print production for acquaintances or the friends and distribute prints to them, it is possible to surely and comfortably make an individual order for print production with ease while checking the destinations and the number of prints.

Preferably, as described above, the total count of the order contents such as the fee and the number of prints for each individual package unit is displayed on the order screen for one order for print production, which allows an order for print production to be surely made with higher convenience and without any mistakes.

As the prints P are outputted in package for each individual package unit, the conventional necessity of sorting for each individual package unit after the print reception can be eliminated, which greatly reduces time and labor. Besides, it is possible to prevent sticking of fingerprints on the prints or other trouble caused by sorting. Thus, even in processing by a person who is not a specialist, prints in the best state can always be distributed to friends.

Especially, the receiver 12 is capable of inputting not only the order information but also additional information such as addresses or comments for each individual package unit to thereby create an order information print on which the order information and/or the number of prints (preferably for each print size) and the print fee for each individual package unit are reproduced. More preferably, individually packed prints can be surely distributed to desired persons by placing the order information print on top of the prints, and individual fees are also readily checked.

In the above embodiment, the address and the comment inputted as the additional information, the number of prints for each print size in each individual package unit, and the print fee for each individual package unit are recorded (reproduced) on the order information print. However, the present invention is not limited to this. Various kinds of information can be recorded on the order information print.

For example, the logo or advertisement of a laboratory that received an order for print production, the message of "copyright is permitted", or the like may also be included therein.

By printing the edge or other portion of the order information print with a predetermined color, the order information print can be more easily distinguished from an ordinary print. The edge of an order information print for the case in which the individual package unit is selected/specified, and the edge of another order information print for the case in which the individual package unit is not selected/specified may be printed with different colors so that both the cases can be easily distinguished from each other.

While the print order receiving method, the print order receiver, and the print production system of the present invention have been described above with reference to the embodiments, the invention is by no means limited thereto and various improvements and modifications can of course be made without departing from the scope of the invention which is defined by the appended claims.

For example, a comment sentence to be recorded on the order information print may be selected from among sentences prepared beforehand as described above.

## Claims

1. A print order receiver installed in a commercial facility, for receiving an order for producing one or more prints from image data, comprising:
image acquiring means (21) adapted to acquire said image data of first images of one order;
input means (23) adapted to allow a customer to perform an input operation of a print order with respect to said first images for individual package units in said one order, said print order can be inputted for each combination of each of said individual package units with each of said first images;
a display (22) adapted to display an order screen on which said print order is inputted through said input means (23) and said inputted print order is displayed;
print order information generating means (26) adapted for generating print order information including indication of one or more second images to be printed that are selected from said first images through said input means (23) and including the number of prints of each of said one or more second images to be printed that is inputted through said input means (23) for each of said individual package units, after said print order for said one order including at least the selected one or more second images to be printed and the number of the prints thereof has been inputted through said input means on said order screen; and
output means (28) adapted to output said print order information generated by said print order information generating means (26) and said image data of said one order which are related to each other;
**characterized by**
a reception slip printer (25) for producing and outputting a reception slip of said print order of said one order inputted through said input means;
wherein said order screen has a matrix configuration having one of said individual package units and said first images vertically arranged, and the other horizontally arranged, said first images being displayed based on said image data of said one order acquired by said image acquiring means (21), and
wherein the matrix has cells in which said print order that is inputted through said input means is displayed.

2. The print order receiver according to claim 1,
wherein said cells display print sizes selected through said input means (23) and a number of prints for each print size inputted through said input means (23).

3. The print order receiver according to claim 1 or 2,
wherein said order screen has said matrix displaying at least one of a print fee for said one order, a number of prints for said one order, a print fee for each of said individual package units, and a number of prints for each of said individual package units in accordance with said print order inputted through said input means (23).

4. The print order receiver according to claim 3,
wherein said display (22) has a function of indicating said number of prints for each print size in at least one of said number of prints for said one order and said number of prints for each of said individual package units on said order screen.

5. The print order receiver according to any one of claims 1 to 4,
wherein said display is a touch panel.

6. The print order receiver according to any one of claims 1 to 5,
wherein an information input screen which is provided as an area within said order screen or separately from said order screen, and on which additional information for each of said individual package units is inputted by said input means, is displayed on said display, said additional information is outputted together with said print order information related to each of said individual package units.

7. A method of receiving a print producing order of one order by acquiring image data of first images of said one order and a print order for individual package units of said one order, by using a print order receiver installed in a commercial facility, comprising:
aquiring said image data of said first images of said one order;
displaying an order screen on which a print order can be inputted through an input means, the order screen having a matrix configuration having one of said individual package units and said first images vertically arranged, and the other horizontally arranged, said first images being displayed based on the acquired image data of said one order;
performing an input operation of the print order by a customer through said input means for each combination of each of said individual package units with each of said first images ;
displaying said inputted print order on the order screen, wherein the matrix has cells in which said inputted order is displayed,
thereafter, generating print order information which includes indication of one or more second images to be printed that have been selected from the said first images through said input means and including the number of prints of each of said one or more second images to be printed for each of said individual package units;
outputting the thus generated print order information and said image data of said one order which are related to each other as said print producing order; and
producing and outputting a reception slip of said print producing order of said one order that is outputted.

8. A print production system comprising:
a print order receiver according to any one of claim 1 to 6; and
a print system including:
a printer (16) having printing means for producing prints which reproduce said image data of said one or more second images to be printed and packaging means (36) for packaging one or more prints in the thus produced prints; and
information processing means (46) for acquiring said print order information and said image data of said one order from said print order receiver, and processing said print order information and said image data to output a processed result to said printer,
wherein said print system produces said one or more prints for each of said individual package units in accordance with said print order information and said image data of said one order supplied from said print order receiver and packages said one or more prints for each of said individual package units to output said one or more prints in a package (80) for each of said individual package units.

9. The print production system according to claim 8,
wherein said information processing means has a function of storing said image data of said one order and a function of sequentially outputting said one or more second images to be printed corresponding to said image data to said printer (16) for each of said individual package units in accordance with said print order information.

10. The print production system according to claim 8 or 9,
wherein said information processing means has a function of generating order information data for reproducing information including said additional information inputted from said print order receiver for each of individual package units as a visible image and a function of outputting said order information data related to each of said individual package units to said printer (16), and
wherein said printer (16) has a function of producing an order information print which reproduces said order information data inputted from said information processing means and has a function of packaging said order information print together with said one or more prints of the corresponding individual package unit.

## Patentansprüche

1. An einem Handelsplatz installierter Abzugbestellungsempfänger zum Entgegennehmen einer Bestellung zum Anfertigen eines oder mehrerer Abzüge von Bilddaten, umfassend:
eine Bilderfassungseinrichtung (21), ausgebildet zum Erfassen der Bilddaten erster Bilder einer Bestellung;
eine Eingabeeinrichtung (23), ausgebildet, um einem Kunden zu ermöglichen, einen Eingabevorgang einer Abzugbestellung bezüglich der ersten Bilder für individuelle Packungseinheiten in der einen Bestellung vorzunehmen, wobei die Abzugbestellung für jede Kombination aus jeder der individuellen Packungseinheiten mit jedem der ersten Bilder eingegeben werden kann;
eine Anzeige (22), ausgebildet zum Anzeigen eines Bestellbildschirms, auf dem die Abzugbestellung über die Eingabeeinrichtung (23) eingegeben wird und die eingegebene Abzugbestellung angezeigt wird;
eine Abzugbestellinformations-Erzeugungseinrichtung (26), ausgebildet zum Erzeugen von Abzugbestellinformation einschließlich der Angabe von einem oder mehreren zweiter zu druckender Bilder, die aus den ersten Bildern über die Eingabeeinrichtung (23) ausgewählt werden, und einer Anzahl von Abzügen jedes der ein oder mehreren zweiten zu druckenden Bilder, die über die Eingabeeinrichtung (23) für jede der individuellen Packungseinheiten eingegeben wird, nachdem die Abzugbestellung für die eine Bestellung einschließlich mindestens der ausgewählten ein oder mehreren zweiten zu druckenden Bilder und die Anzahl von deren Abzügen über die Eingabeeinrichtung auf dem Bestellbildschirm eingegeben wurde; und
eine Ausgabeeinrichtung (28), ausgebildet zum Ausgeben der von der Abzugbestellinformations-Erzeugungseinrichtung (26) erzeugten Abzugbestellinformation und der Bilddaten der einen Bestellung, die zueinander in Beziehung stehen;
**gekennzeichnet durch** einen Empfangsbeleg-Drucker (25) zum Erzeugen und Ausgeben eines Empfangsbelegs über die Abzugbestellung der einen über die Eingabeeinrichtung eingegebenen Bestellung;
wobei der Bestellbildschirm eine Matrixkonfiguration aufweist, in der von den individuellen Packungseinheiten und den ersten Bildern die einen vertikal angeordnet und die anderen horizontal angeordnet sind, die ersten Bilder basierend auf den Bilddaten der einen Bestellung, die von der Bilderfassungseinrichtung (21) erfasst wurden, angezeigt werden, und
wobei die Matrix Zellen enthält, in denen die über die Eingabeeinrichtung eingegebene Abzugbestellung angezeigt wird.

2. Abzugbestellungsempfänger nach Anspruch 1, bei dem die Zellen Abzuggrößen anzeigen, die über die Eingabeeinrichtung (23) ausgewählt werden, außerdem eine Anzahl von Abzügen für jede Abzuggröße, eingegeben über die Eingabeeinrichtung (23).

3. Abzugbestellungsempfänger nach Anspruch 1 oder 2, bei dem der Bestellbildschirm über die Matrix mindestens einen der folgenden Posten anzeigt: Abzuggebühr für die eine Bestellung, Anzahl von Abzügen für die eine Bestellung, Abzuggebühr für jede der individuellen Packungseinheiten und Anzahl von Abzügen für jede der individuellen Packungseinheiten nach Maßgabe der über die Eingabeeinrichtung (23) eingegebenen Abzugbestellung.

4. Abzugbestellungsempfänger nach Anspruch 3, bei dem die Anzeige (22) eine Funktion des Anzeigens der Anzahl von Abzügen für jede Abzuggröße in mindestens einer von der Anzahl von Abzügen für die eine Bestellung und der Anzahl von Abzügen für jede der individuellen Packungseinheiten auf dem Bestellbildschirm aufweist.

5. Abzugbestellungsempfänger nach einem der Ansprüche 1 bis 4, bei dem die Anzeige ein Berührfeld ist.

6. Abzugbestellungsempfänger nach einem der Ansprüche 1 bis 5, bei dem auf der Anzeige ein Informationseingabebildschirm, bei dem es sich um einen Bereich innerhalb des Bestellbildschirms oder um einen von dem Bestellbildschirm getrennten Bildschirm handelt, auf dem Zusatzinformation für jede der individuellen Packungseinheiten über die Eingabeeinrichtung eingegeben wird, angezeigt wird, wobei die Zusatzinformation zusammen mit der sich auf jede der individuellen Packungseinheiten beziehende Abzugbestellinformation ausgegeben wird.

7. Verfahren zum Empfangen einer Abzug-Fertigungsbestellung einer Bestellung durch Erfassen von Bilddaten erster Bilder der einen Bestellung und einer Abzugbestellung für individuelle Packungseinheiten der einen Bestellung, unter Verwendung eines Abzugbestellungsempfängers, der an einem Handelsplatz installiert ist, umfassend:
Erfassen der Bilddaten der ersten Bilder der einen Bestellung;
Anzeigen eines Bestellbildschirms, auf dem eine Abzugbestellung über die Eingabeeinrichtung eingegeben werden kann, wobei der Bestellbildschirm eine Matrixkonfiguration aufweist, in der von den individuellen Packungseinheiten und den ersten Bildern die einen vertikal und die anderen horizontal angeordnet sind, und wobei ersten Bilder basierend auf den erfassten Bilddaten der einen Bestellung angezeigt werden;
Ausführen eines Eingabevorgangs der Abzugbestellung durch einen Kunden über die Eingabeeinrichtung für jede Kombination aus jeder der individuellen Packungseinheiten mit jedem der ersten Bilder;
Anzeigen der eingegebenen Abzugbestellung auf den Bestellbildschirm, wobei die Matrix Zellen enthält, in denen die eingegebene Bestellung angezeigt wird,
anschließend, Erzeugen von Abzugbestellinformation, welche eine Anzeige eines oder mehrerer zweiter zu druckender Bilder, die aus den ersten Bildern über die Eingabeeinrichtung ausgewählt wurden, und die Anzahl von Abzügen für jedes von dem einen oder den mehreren zweiten zu druckenden Bildern für jede der individuellen Packungseinheiten enthält;
Ausgeben der so erzeugten Abzugbestellinformation und der Bilddaten der einen Bestellung, die zueinander in Beziehung stehen, als die Abzug-Fertigungsbestellung; und
Erzeugen und Ausgeben eines Empfangsbelegs über die Abzugbestellung der einen ausgegebenen Bestellung.

8. Abzug-Erstellungssystem, umfassend:
einen Abzugbestellungsempfänger nach einem der Ansprüche 1 bis 6; und
ein Printsystem, enthaltend:
einen Printer (16) mit einer Druckeinrichtung zum Erzeugen von Abzügen, welche die Bilddaten des einen oder der mehreren zweiten zu druckenden Bilder reproduzieren, und eine Verpackungseinrichtung (36) zum Verpacken eines oder mehrerer Abzüge in den so erstellten Abzügen; und
eine Informationsverarbeitungseinrichtung (46) zum Erfassen der Abzugbestellinformation und der Bilddaten der einen Bestellung aus dem Abzugbestellungsempfänger, und zum Verarbeiten der Abzugbestellinformation und der Bilddaten,
um ein verarbeitetes Ergebnis an den Printer auszugeben,
wobei das Printsystem den einen oder mehrere Abzüge für jede der individuellen Packungseinheiten nach Maßgabe der Abzugbestellinformation und der Bilddaten der einen, von dem Abzugbestellempfänger gelieferten Bestellung sowie Packungen mit dem einen oder mit mehreren Abzügen für jede der individuellen Packungseinheiten erzeugt, um den einen oder die mehreren Abzüge in einer Packung (80) für jede der individuellen Packungseinheiten auszugeben.

9. System nach Anspruch 8, bei dem die Informationsverarbeitungseinrichtung eine Funktion des Speicherns der Bilddaten der einen Bestellung und eine Funktion des sequentiellen Ausgebens des einen oder der mehreren zweiten zu druckenden Bilder entsprechend den Bilddaten an den Printer (16) für jede der individuellen Packungseinheiten nach Maßgabe der Abzugbestellinformation aufweist.

10. System nach Anspruch 8 oder 9, bei dem die Informationsverarbeitungseinrichtung eine Funktion des Erzeugens von Bestellinformationsdaten zum Reproduzieren von Information aufweist, einschließlich der Zusatzinformation, die von dem Abzugbestellungsempfänger für jede der individuellen Packungseinheiten eingegeben wurde, als sichtbares Bild, und eine Funktion des Ausgebens der Bestellinformationsdaten bezüglich jeder der individuellen Packungseinheiten an den Printer (16) enthält, und
wobei der Printer (16) eine Funktion des Erzeugens eines Bestellinformationsdrucks besitzt, der die Bestellinformationsdaten reproduziert, welche von der Informationsverarbeitungseinrichtung eingegeben wurden, und eine Funktion des Verpackens des Bestellinformationsdrucks zusammen mit dem einen oder mit mehreren Abzügen der entsprechenden individuellen Packungseinheit aufweist.

## Revendications

1. Récepteur de commande d'impression installé dans une installation commerciale, servant à recevoir une commande pour produire une ou plusieurs impressions à partir de données d'image, comprenant :
un moyen d'acquisition d'image (21) adapté pour acquérir lesdites données d'image de premières images d'une commande ;
un moyen d'entrée (23) adapté pour permettre à un client d'effectuer une opération d'entrée d'une commande d'impression par rapport auxdites premières images pour des unités de conditionnement individuelles dans ladite commande, ladite commande d'impression peut être entrée pour chaque combinaison de chacune desdites unités de conditionnement individuelles avec chacune desdites premières images ;
un écran d'affichage (22) adapté pour afficher un écran de commande sur lequel ladite commande d'impression est entrée par l'intermédiaire dudit moyen d'entrée (23) et ladite commande d'impression entrée est affichée ;
un moyen de génération d'informations de commande d'impression (26) adapté pour générer des informations de commande d'impression comprenant l'indication d'une ou de plusieurs secondes images à imprimer qui sont sélectionnées à partir desdites premières images par l'intermédiaire dudit moyen d'entrée (23) et comprenant le nombre d'impressions de chacune desdites secondes images à imprimer qui est entré par l'intermédiaire dudit moyen d'entrée (23) pour chacune desdites unités de conditionnement individuelles, une fois que ladite commande d'impression pour ladite commande comprenant au moins la ou les secondes images sélectionnées à imprimer et le nombre des impressions de celles-ci a été entrée par l'intermédiaire dudit moyen d'entrée sur ledit écran de commande ; et
un moyen de sortie (28) adapté pour sortir lesdites informations de commande d'impression générées par ledit moyen de génération d'informations de commande d'impression (26) et lesdites données d'image de ladite commande qui sont mutuellement liées ;
**caractérisé par**
une imprimante de bordereau de réception (25) destinée à produire et à sortir un bordereau de réception de ladite commande d'impression de ladite commande entrée par l'intermédiaire dudit moyen d'entrée ;
dans lequel ledit écran de commande présente une configuration matricielle ayant un élément parmi lesdites unités de conditionnement individuelles et lesdites premières images agencé à la verticale, et l'autre de ces éléments agencé à l'horizontale, lesdites premières images étant affichées sur la base desdites données d'image de ladite commande acquises par ledit moyen d'acquisition d'image (21), et
dans lequel la matrice comporte des cellules dans lesquelles est affichée ladite commande d'impression qui est entrée par l'intermédiaire dudit moyen d'entrée.

2. Récepteur de commande d'impression selon la revendication 1,
dans lequel lesdites cellules affichent des tailles d'impression sélectionnées par l'intermédiaire dudit moyen d'entrée (23) et un nombre d'impressions pour chaque taille d'impression entrée par l'intermédiaire dudit moyen d'entrée (23).

3. Récepteur de commande d'impression selon la revendication 1 ou 2,
dans lequel ledit écran de commande présente ladite matrice affichant au moins un élément parmi un coût d'impression pour ladite commande, un nombre d'impressions pour ladite commande, un coût d'impression pour chacune desdites unités de conditionnement individuelles, et un nombre d'impressions pour chacune desdites unités de conditionnement individuelles conformément à ladite commande d'impression entrée par l'intermédiaire dudit moyen d'entrée (23).

4. Récepteur de commande d'impression selon la revendication 3,
dans lequel ledit écran d'affichage (22) a une fonction consistant à indiquer ledit nombre d'impressions pour chaque taille d'impression dans ledit nombre d'impressions pour ladite commande et/ou ledit nombre d'impressions pour chacune desdites unités de conditionnement individuelles sur ledit écran de commande.

5. Récepteur de commande d'impression selon l'une quelconque des revendications 1 à 4,
dans lequel ledit écran d'affichage est un écran tactile.

6. Récepteur de commande d'impression selon l'une quelconque des revendications 1 à 5,
dans lequel un écran d'entrée d'informations qui est présenté comme zone sur ledit écran de commande ou séparément dudit écran de commande, et sur lequel des informations supplémentaires pour chacune desdites unités de conditionnement individuelles sont entrées par ledit moyen d'entrée, est affiché sur ledit écran d'affichage, lesdites informations supplémentaires étant sorties avec lesdites informations de commande d'impression liées à chacune desdites unités de conditionnement individuelles.

7. Procédé de réception d'une commande de production d'impression d'une commande grâce à l'acquisition de données d'image de premières images de ladite commande et d'une commande d'impression pour des unités de conditionnement individuelles de ladite commande, grâce à l'utilisation d'un récepteur de commande d'impression installé dans une installation commerciale, comprenant :
l'acquisition desdites données d'image desdites premières images de ladite commande ;
l'affichage d'un écran de commande sur lequel une commande d'impression peut être entrée par l'intermédiaire d'un moyen d'entrée, l'écran de commande présentant une configuration matricielle ayant un élément parmi lesdites unités de conditionnement individuelles et lesdites premières images agencé à la verticale, et l'autre de ces éléments agencé à l'horizontale, lesdites premières images étant affichées sur la base des données d'image acquises de ladite commande,
la réalisation d'une opération d'entrée de la commande d'impression par un client par l'intermédiaire dudit moyen d'entrée pour chaque combinaison de chacune desdites unités de conditionnement individuelles avec chacune desdites premières images ;
l'affichage de ladite commande d'impression entrée sur l'écran de commande, la matrice comportant des cellules dans lesquelles est affichée ladite commande entrée ;
ensuite, la génération d'informations de commande d'impression qui comprennent l'indication d'une ou de plusieurs secondes images à imprimer qui ont été sélectionnées à partir desdites premières images par l'intermédiaire dudit moyen d'entrée et comprenant le nombre d'impressions de chacune desdites secondes images à imprimer pour chacune desdites unités de conditionnement individuelles ;
la sortie des informations de commande d'impression ainsi générées et desdites données d'image de ladite commande qui sont mutuellement liées en tant que dite commande de production d'impression ; et
la production et la sortie d'un bordereau de réception de ladite commande de production d'impression de ladite commande qui est sortie.

8. Système de production d'impression comprenant :
un récepteur de commande d'impression selon l'une quelconque des revendications 1 à 6 ; et
un système d'impression comprenant :
une imprimante (16) comportant un moyen d'impression pour produire des impressions qui reproduisent lesdites données d'image de ladite ou desdites secondes images à imprimer et un moyen de conditionnement (36) pour conditionner une ou plusieurs impressions des impressions ainsi produites ; et
un moyen de traitement d'informations (46) destiné à acquérir lesdites informations de commande d'impression et lesdites données d'image de ladite commande à partir dudit récepteur de commande d'impression, et à traiter lesdites informations de commande d'impression et lesdites données d'image pour sortir un résultat traité sur ladite imprimante,
dans lequel ledit système d'impression produit ladite ou lesdites impressions pour chacune desdites unités de conditionnement individuelles conformément auxdites informations de commande d'impression et auxdites données d'image de ladite commande fournies depuis ledit récepteur de commande d'impression et conditionne ladite ou lesdites impressions pour chacune desdites unités de conditionnement individuelles pour sortir ladite ou lesdites impressions dans un emballage (80) pour chacune desdites unités de conditionnement individuelles.

9. Système de production d'impression selon la revendication 8,
dans lequel ledit moyen de traitement d'informations a une fonction consistant à stocker lesdites données d'image de ladite commande et une fonction consistant à sortir séquentiellement ladite ou lesdites secondes images à imprimer correspondant auxdites données d'image sur ladite imprimante (16) pour chacune desdites unités de conditionnement individuelles conformément auxdites informations de commande d'impression.

10. Système de production d'impression selon la revendication 8 ou 9,
dans lequel ledit moyen de traitement d'informations a une fonction consistant à générer des données d'informations de commande pour reproduire des informations comprenant lesdites informations supplémentaires entrées depuis ledit récepteur de commande d'impression pour chacune des unités de conditionnement individuelles en tant qu'image visible et une fonction consistant à sortir lesdites données d'informations de commande liées à chacune desdites unités de conditionnement individuelles sur ladite imprimante (16), et
dans lequel ladite imprimante (16) a une fonction consistant à produire une impression d'informations de commande qui reproduit lesdites données d'informations de commande entrées depuis ledit moyen de traitement d'informations et a une fonction consistant à conditionner ladite impression d'informations de commande avec ladite ou lesdites impressions de l'unité de conditionnement individuelle correspondante.
